# EUROPEAN PATENT SPECIFICATION

(11) **EP 2 742 713 B1**
(45) Date of publication and mention of the grant of the patent: **26.02.2020**
(21) Application number: 12822392.2
(22) Date of filing: 19.07.2012
(51) Int. Cl.: H04W 16/18, H04W 24/02, H04W 24/08, H04W 24/10

(54) **MOBILE RADIO COMMUNICATIONS NETWORK OPTIMISATION**
OPTIMIERUNG EINES MOBILFUNKKOMMUNIKATIONSNETZES
OPTIMISATION DE RÉSEAU DE COMMUNICATION RADIO MOBILE

(30) Priority: 11.08.2011 GB 201113849
(43) Date of publication of application: 18.06.2014
(73) Proprietor: NEC Corporation, Tokyo 108-8001 (JP)
(72) Inventor: JACTAT, Caroline, Reading Berkshire RG2 0TD (GB); FUTAKI, Hisashi, Tokyo 108-8001 (JP); NUNZI, Giorgio, 69115 Heidelbelg (DE)
(74) Representative: MacDougall, Alan John Shaw
(86) International application number: PCT/JP2012/069057
(87) International publication number: WO 2013/021832

(56) References cited:
- WO-A1-2010/091110
- WO-A1-2011/082831
- WO-A1-2011/083801
- CN-A- 102 098 722
- JP-A- 2012 129 641
- "3rd Generation Partnership Project; Technical Specification Group Services and System Aspects; Telecommunication management; Subscriber and equipment trace; Trace control and configuration management (Release 11)", 3GPP STANDARD; 3GPP TS 32.422, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V11.0.0, 17 June 2011 (2011-06-17), pages 1-115, XP050553247, [retrieved on 2011-06-17]
- NOKIA SIEMENS NETWORKS ET AL: "Aligning MDT activation procedures with SA3 privacy requirements", 3GPP DRAFT; 32422_CR0124R2_(REL-10)_S5-112152 CR124R2 REL10 32422V1030 PRIVACY ALIGNEMENT WITH SA3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Shenzhen, P.R. China; 20110509, 24 May 2011 (2011-05-24), XP050532992, [retrieved on 2011-05-24]
- ERICSSON: "Using TCE identity in logged MDT configuration", 3GPP DRAFT; S5-111450 CR R10 32422-A21 HO MDT AND TCE ID-V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. San Diego, USA; 20110228, 3 March 2011 (2011-03-03), XP050530482, [retrieved on 2011-03-03]
- ERICSSON: "pCR to shadow TS 32.422 and to 32.442 for MDT, MDT trace parameters", 3GPP DRAFT; S5-103266_MDT_PARAMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Jacksonville, USA; 20101115, 19 November 2010 (2010-11-19), XP050529350, [retrieved on 2010-11-19]
- 3GPP TS 32.422 V10.4.0 June 2011, pages 15 - 18,47-52,92-95, XP050553246
- QUALCOMM EUROPE: 'Email discussion summary [66b#7] LTE-UMTS: Minimization of drive tests' 3GPP TSG-RAN WG2 MEETING #67, R2-094291 18 August 2009, XP050352535
- 3GPP TS 37.320 V10.2.0 05 June 2011, XP050553612
- ALCATEL-LUCENT: 'Add error handling for Management based MDT scenarios' 3GPP TSG-SA5 SA5#77 S5-111945 13 May 2011, pages 5 - 111945, XP050531450
- NEC: 'Add selection based on type of device' 3GPP TSG SA WG5 (TELECOM MANAGEMENT) MEETING #78 S5-112523 26 August 2011, pages 5 - 112523, XP050551406
- "3rd Generation Partnership Project; Technical Specification Group Core Network and Terminals; Numbering, addressing and identification (Release 9)", 3GPP STANDARD; 3GPP TS 23.003, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V9.7.0, 15 June 2011 (2011-06-15), pages 1-77, XP050553140, [retrieved on 2011-06-15]

## Description

### Technical Field

The present invention relates to mobile radio communications network optimisation and, in particular, to a mobile radio communications network device arranged to select at least one mobile radio communications device for use in relation to network performance testing as set out in the appended claims. The present invention also relates to a mobile radio communications device for use with a network arranged in the above manner, a method of collecting network performance measurements, and a related communications system as set out in the appended claims.

### Background Art

The functionality afforded mobile radio communication devices such as cell phone handsets has been increasingly defined by reference to the Third Generation Partnership Protocol (3GPP) proposals and standards and which has focused most recently upon ongoing improvements to the Universal Mobile Telecommunications System (UMTS) such as the Long Term Evolution (LTE) ongoing improvement thereto.

To perform network optimisation after a network has become operational, network providers have implemented so-called drive testing. During drive testing, a test mobile phone is configured to collect measurement and location information. The test mobile phone is transported (or "driven") around an area comprising a portion of a network provider's network and collects the required information. Once this information has been collected, it is then studied to analyse the network coverage in different locations. Various network parameters e.g. power, antenna locations, antenna tilts, may be optimised based upon the analysis of the retrieved information. The drive test would need to be performed again to determine if the changes to the network parameters have actually improved (or optimised) the network.

Other techniques have also been proposed in the following documents: "3rd Generation Partnership Project; Technical Specification Group Services and System Aspects; Telecommunication management; Subscriber and equipment trace; Trace control and configuration management (Release 11)", 3GPP STANDARD; 3GPP TS 32.422, vol. SA WG5, no V11.0.0, 17 June 2011; pages 1-115, and NOKIA SIEMENS NETWORKS ET AL: "Aligning MDT activation procedures with SA3 privacy requirements", 3GPP DRAFT; vol. SA WG5, no Shenzhen, P.R. China; 20110509, 24 May 2011,

WO 2011082831 discloses a method of determining geographical determination of coverage in a mobile communications system by obtaining measurement data provided by a plurality of mobile terminals the method comprising the steps of: requesting terminal capability information from the subscriber terminals in a cell; obtaining the terminal capability information from the subscriber terminals; comparing the terminal capability information with capability requirement information; selecting selected subscriber terminals on the basis of their capability information; sending a trace activation command to the selected subscriber terminals; and receiving measurement data measured by the selected subscriber terminals.

"3GPP Technical Specification Group Core Network and Terminals; Numbering, addressing and identification"; 3GPP TS 23.003, V9.7.0; 3GPP Mobile Competence Centre, 650 Route des Lucioles, Sophia-Antipolis, Cedex, is a standard which generally discloses the purpose and use of International Mobile station Equipment Identities (IMEI) within digital cellular telecommunications systems and the 3GPP system in particular.

### Summary of Invention

### Technical Problem

However, it is generally not sufficient to perform a single drive test (and follow-up drive test) for a particular portion of a network. This is because the same drive test performed in the same area but at a different time will produce different results. Therefore, it is desirable to perform further drive tests at different times to predict the network behaviour, for example at different loads.

Network providers have recognised that performing drive tests can be costly and have a negative impact on the environment due to the increase in vehicle emissions arising from carrying out such tests. To address these issues, network providers have developed automated solutions for carrying out network optimisation tests whereby mobile radio communications device User Equipment (UE) in the field is employed as part of the testing. In these solutions, information is acquired from active UE which are connected to the network of the provider performing the network optimisation.

So-called Minimization of Drive Testing (MDT) is a development to manage UE based network performance measurements and which can serve to reduce the number of drive tests which are required during network optimisation. MDT relates to autonomous collection of UE radio measurements using Control Plane architecture for both Universal Technology Radio Access Network (UTRAN) and Evolved Universal Technology Radio Access Network (E-UTRAN) systems and can allow a network provider to optimise network performance (e.g. to detect coverage holes) and can allow improved network planning to enhance the network coverage.

Details of network performance measurement testing methods can be found within 3GPP Technical Specifications 32.422 and 37.320.

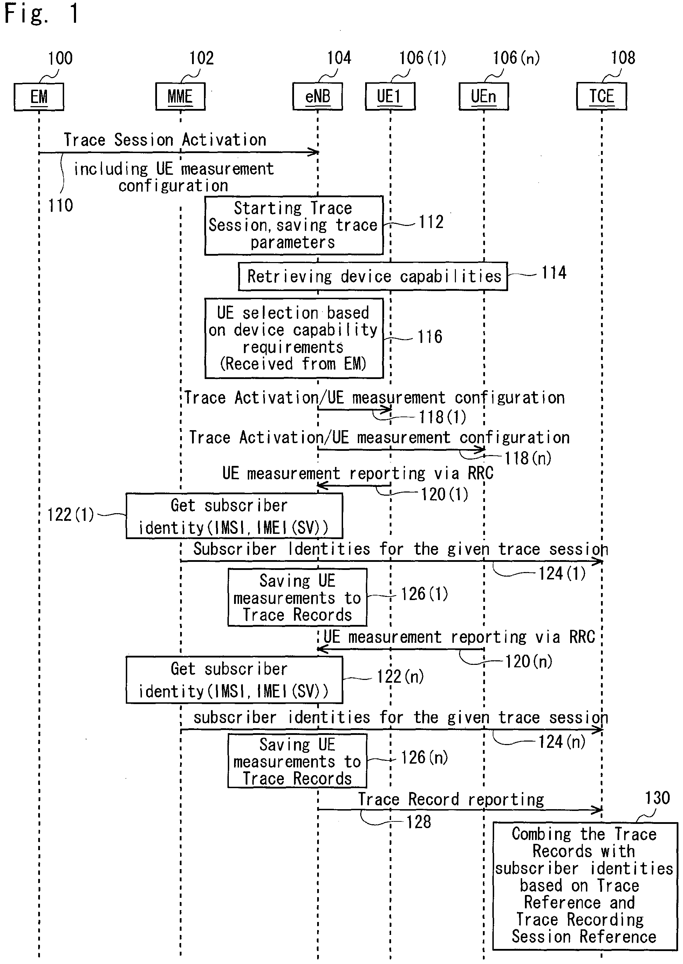

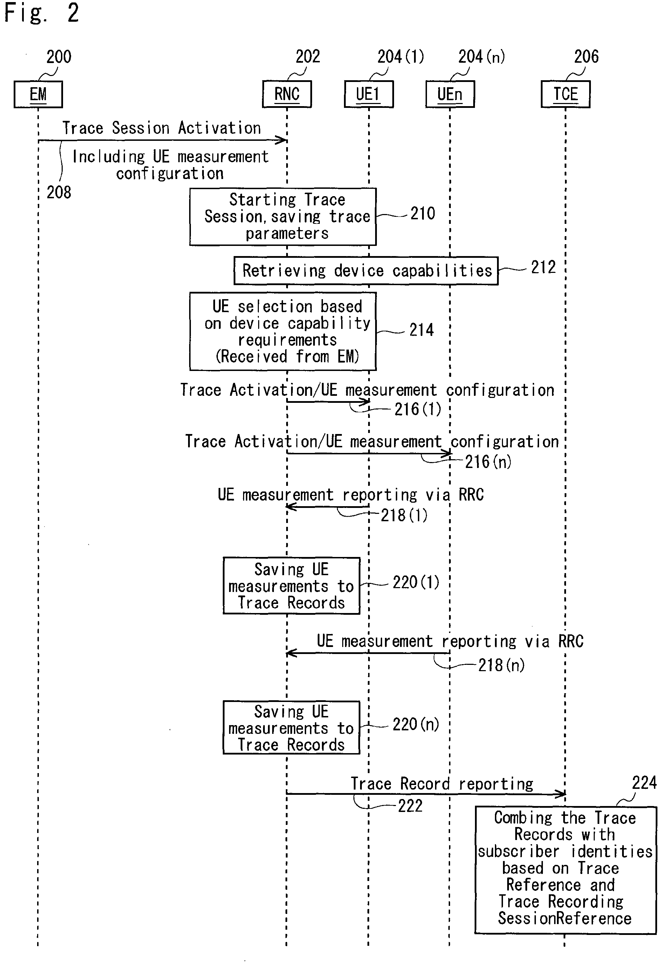

Particular examples of MDT processes are illustrated in Figs. 1 and 2, which are discussed briefly below, but are described in more detail later.

Fig. 1 illustrates a schematic process signalling flow for an MDT process in an LTE network. An Element Manager (EM) comprises a network management entity whose role is to configure functions in the network elements, including the UE MDT measurements in the evolved NodeB (eNB). The eNB (or LTE base station when E-UTRAN is used as the radio access) is responsible for selecting the UE devices for participating in MDT measurement collections and configuring the MDT measurements towards UEs, i.e. the radio network sends Radio Resource Configuration and Measurement Configuration which are radio level signalling towards the UE. In this illustrative example, the UE comprises terminal equipment or a device/handset which is capable of performing radio measurements for the purpose of an MDT process.

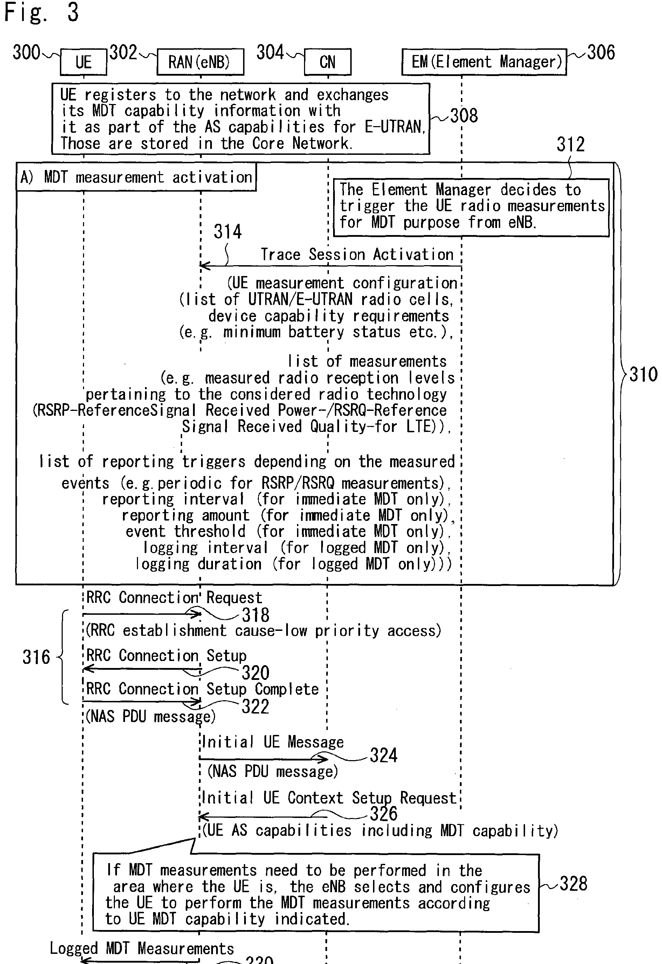

After receiving a Trace Session Activation request (including UE measurement configuration - described further below in relation to Fig. 3) from the EM, the eNB is operative to implement a Trace Session and saves the trace parameters. The eNB also retrieves UE device capabilities from one or more UEs (i.e. UE1 to UEn). Selection of the UEs from which measurements will be collected as part of the MDT process is performed by the eNB and is based upon device capability requirements which have been received from the EM. The eNB then sends Trace Activation/UE measurement configuration signals to each of the one or more UEs (UE1 to UEn). A UE measurement report is sent by each of the one or more UEs (UE1 to UEn) using the Radio Resource Control (RRC) protocol. Responsive to receipt of each of the UE measurement reports at the eNB, a Mobility Management Entity (MME) retrieves the permanent UE (subscriber) identity MDT configuration (i.e. International Mobile Subscriber Identity (IMSI) or International Mobile Equipment Identity (Software Version) (IMEI (SV))) for the given trace session and forwards these to a Trace Collection Entity (TCE) in case the E-UTRAN does not have the permanent UE identity. The eNB stores the UE measurements to a Trace Records storage module and then forwards a Trace Record report to the TCE.

The TCE is operative to collect the UE measurements as received from the eNB and, in some instances, can be co-located with the EM (i.e. implemented on the same machine or physical entity).

After receipt of the Trace Record report from the eNB, the TCE is operative to combine the Trace Records with permanent UE identities based on Trace Reference and Trace Recording Session Reference.

Fig. 2 illustrates a schematic process signalling flow for an MDT process in a UMTS network. An Element Manager (EM) comprises a network management entity whose role is to configure functions in the network elements, including the UE MDT towards a Radio Network Controller (RNC). The RNC (or UMTS base station when UTRAN is used as the radio access) is responsible for selecting the UE devices for participating in MDT measurements collections and configuring the MDT measurements towards UEs i.e. the radio network sends Radio Resource Configuration and Measurement Configuration which are radio level signalling towards the UE. In this illustrative example, the UE comprises terminal equipment or a device/handset which is capable of performing radio measurements for the purpose of an MDT process.

After receiving a Trace Session Activation request (including UE measurement configuration - again, described further below in relation to Fig. 3) from the EM, the RNC is operative to implement a Trace Session and saves the trace parameters. The RNC also retrieves UE device capabilities from one or more UEs (i.e. UE1 to UEn). Selection of the UEs from which measurements will be collected as part of the MDT process is performed by the RNC and is based upon device capability requirements which have been received from the EM. The RNC then sends Trace Activation/UE measurement configuration signals to each of the one or more UEs (UE1 to UEn). A UE measurement report is sent by each of the one or more UEs (UE1 to UEn) using the Radio Resource Control (RRC) protocol. Responsive to receipt of each of the UE measurement reports, the RNC stores the UE measurements to a Trace Records storage module and then forwards a Trace Record report to a Trace Collection Entity (TCE).

The TCE is operative to collect the UE measurements as received from the RNC and, in some instances, can be co-located with the EM (i.e. implemented on the same machine or physical entity).

After receipt of the Trace Record report from the RNC, the TCE is operative to combine the Trace Records with permanent UE (subscriber) identities based on Trace Reference and Trace Recording Session Reference.

The types of UE which operate within a network generally fall within two broad categories. The first category comprises Machine Type Communications (MTC) devices and second comprises non-MTC devices (or "human-controlled" devices such as, for example, a mobile phone). MTC devices may be used in fleet management or logistical applications which require mobility and GPS (Global Positioning System) capability but do not require screens or voice capability. Other solutions such as smart meters require low bandwidth, no mobility and no voice capability. These MTC devices are used to perform Machine-to-Machine (M2M) communications.

Currently, any device can be selected for MDT purposes including MTC devices and non-MTC (i.e. human controlled) devices. Those UEs whose users have not given consent for their device to be used as part of network performance measurement testing and roaming UEs are excluded from MDT.

An example of a current device selection process for MDT is illustrated in Fig. 3, which is discussed briefly below, but is described in more detail later.

Fig. 3 illustrates a schematic process signalling flow for selection of UE for participation in an MDT process. It is derived from SA5 TS 32.422 for UE selection for MDT purpose.

When UE registers to the Core Network (CN), it forwards its MDT capability information to the core network as part of the Access Stratum (AS) capabilities for E-UTRAN. This information is provided as a YES/NO capability bit information related to MDT. The information is stored in the CN.

The performance of MDT measurements is activated by the EM which triggers the UE radio measurements for the MDT process from the RAN (eNB). The EM sends a Trace Session Activation command to the eNB. The command includes UE measurement configuration information comprising, for example: a list of UTRAN/E-UTRAN radio cells; device capability requirements (e.g. minimum battery status etc.); a list of measurements (e.g. measured radio reception levels pertaining to the considered radio technology (Reference Signal Received Power (RSRP)/Reference Signal Received Quality (RSRQ) for LTE)); a list of reporting triggers depending on the measured events (e.g. periodic for RSRP/RSRQ measurements); a reporting interval (for immediate MDT only); a reporting amount (for immediate MDT only); an event threshold (for immediate MDT only); a logging interval (for logged MDT only); a logging duration (for logged MDT only).

Immediate MDT comprises functionality where the UE is connected to a network, and where measurements are transmitted from the UE to the eNB immediately. Logged MDT, on the other hand, relates to measurements taken by the UE whilst in an idle state. These measurements are stored in a measurement log of the UE for reporting to an eNB at a later point in time.

When the UE wishes to establish connection with the RAN (eNB) it initiates a RRC Connection Set-up process. Initially, the UE transmits a RRC Connection Request to the eNB. The RRC Connection Request contains the UE identity (IMSI, TMSI, etc) and the RRC establishment cause (e.g. low priority access, as in the illustrated example).

Responsive to reception of the RRC Connection Request, the eNB transmits an RRC Connection Set-up message to the UE. The RRC Connection Set-up message comprises parameters required to establish a dedicated channel (DCH) between the UE and eNB.

Upon reception of the RRC Connection Set-up message, the UE compares the information element (IE) values and, if the values are identical, transmits a RRC Connection Set-up Complete message via the DCH to the eNB. This RRC Connection Set-up Complete message is conveyed by Non-Access Stratum Packet Data Units (NAS-PDUs).

A Trace Recording Session shall be started at the eNB when it receives trace control and configuration parameters (UE AS capabilities including MDT capability) via an Initial UE Context Setup Request message from the CN (i.e. a trace session activation request). Such an Initial UE Context Setup Request message is sent by the CN to the eNB in response to receipt of an Initial UE Message from the eNB. That is, if MDT measurements need to be performed in the area where the UE is, the eNB selects and configures the UE to perform the MDT measurements according to UE MDT capability indicated.

In the illustrated example, a trace recording session of logged MDT shall be started in the eNB for a given UE when a trace session activation request (i.e. the Initial UE Context Setup Request) is received from the CN for the UE and the MDT UE selection conditions are satisfied for the UE. The eNB shall configure the corresponding MDT RRC measurements at the UE. If selection conditions are not satisfied, the eNB shall store the trace control and configuration parameters, and forward these parameters when the UE hands-over to other eNBs.

In the above described processes, UE devices are selected for participation in MDT processes based on the attached RAN (i.e. location of the device) and the MDT capability of the UE (i.e. the device needs to be MDT capable).

International patent application WO2010/145531 discloses a method and apparatus for measuring a log by minimizing drive test (MDT). The method includes the steps of: creating MDT log measurement configuration information; according to a predefined rule, sending said MDT logging measurement configuration information to the connected user equipment (UE) and/or the idle UE.

International patent application WO2011/050846 discloses measures for enhancing network performance monitoring. Such measures may for example comprise receiving a report on measurements of terminal-related network performance parameters from a terminal, acquiring information of access network-related network performance parameters, and combining the received terminal-related network performance parameters and the acquired access network-related network performance parameters into a combined network performance report.

It will be appreciated that, when performing MDT processes, if MTCs are considered in addition to non-MTC UE devices (as is the current situation), the amount of data collected can be very large. The network does not distinguish between MTCs and non-MTCs when selecting devices for MTD processes. Data collected from MTC devices during MDT processes is generally less useful than that collected from non-MTC devices. Therefore, a large amount of data collected is not useful (generally, the portion corresponding to that collected from the MTC devices). Consequently, a large amount of signalling overhead is potentially wasted for communication with MTC devices.

The present invention is set out in the appended independent claims. Optional features are set out in the appended dependent claims. In the following, any examples and embodiments not falling within the scope of these claims do not form a part of the invention and are provided for illustrative purposes only.

### Solution to Problem

According to an example, there is provided a mobile radio communications network device operative to collect network performance measurements and to select at least one mobile radio communications device from which network performance measurements are to be collected if at least one parameter of the at least one mobile radio communication device corresponds to at least one specified selection parameter, wherein the at least one specified selection parameter comprises data identifying at least one mobile radio communication device characteristic.

The present invention may be applicable to MDT processes (which may be known as management of UE based network performance measurements) in the LTE radio technology, and to terminal equipment (handset) or User Equipment (UE) access to the Evolved Packet System (EPS) through an E-UTRAN (Evolved Universal Technology Radio Access Network) radio network. The present invention may also be applicable in UMTS radio technology and to terminal equipment access to the CN through a UTRAN radio network. More specifically, the present invention may be applicable to device selection in the context of collection of UE radio measurements by a network operator and in particular to control the type of device relevant for that data collection.

The present invention may serve to reduce signalling overheads in relation to MDT processes (i.e. MDT configuration and MDT data collection). Since the number of Machine-Type communications can be up to at least two orders of magnitude higher than for human-to-human communications, the signalling overhead reduction would be in this order if the network is operative not to configure such MTC devices for MDT processes.

The present invention may also serve to allow a network operator/provider to consider only certain types of devices depending on what it wants to achieve with MDT measurements. For example, small data transmissions devices may not be relevant for MDT data collection targeting the network throughput (and so the network operator may wish to exclude these types of device from the devices from which measurements are collected in an MDT process). On the other hand, trouble-shooting of MTC devices might become a relevant business case in the future, and so the network operator may wish to include these types of device in the devices from which measurements are collected in an MDT process.

The present invention may also serve to allow consideration of only those devices which are human-controlled (i.e. non-MTC devices), for example, in instances where the network operator wishes to perform network coverage optimization to improve user experience. Hence those (e.g. MTC) devices not fulfilling certain requirements (e.g. restricted time, low mobility, low traffic, low energy characteristics) would not be considered during MDT measurement collection. Such MTC devices are not relevant for UE (User Equipment) based network performance measurements in this instance because the network operator wishes to improve the network coverage and capacity primarily for human communications devices. Specifically, it may be less relevant to improve the network coverage/capacity for machine type communications devices at the radio cell edge. Furthermore, the consideration of user consent or roaming is not needed when it comes to MTC device selection for the purpose of UE based network performance measurements.

The present invention may also serve to allow measurements to be taken from those devices which are known to provide reliable location information (e.g. by virtue of them being low mobility).

The present invention may also serve to allow a network operator to check and improve radio network throughput. In this instance, small data transmissions devices are not relevant for UE based network performance measurements and so the invention can allow the network operator to exclude such devices from consideration during the acquisition of UE based network performance measurements.

Extra low power consumption UE devices may not be relevant for UE based network performance measurements because such measurements can drain the remaining battery of the device which renders the device unable to transmit critical data to the network when needed (e.g. periodic location information for a prisoner being tracked). The invention may be operative to allow a network operator to exclude such devices from consideration during the acquisition of UE based network performance measurements. If such devices were required for acquisition of measurements therefrom, the present invention may operate to allow a RAN to instruct the UE device to switch to the most efficient power saving state (i.e. by release of the radio connection) instead of configuring the device for long discontinuous reception/transmission periods.

Low-memory UE devices may not be relevant for UE based network performance measurements. Currently, the mandated memory size is set to 64 kbytes for the UE device to gather a consistent minimal set of radio measurements. However, it is deemed that some machine type communications devices do not have such memory size. Therefore, the present invention may be operative to exclude such devices from consideration during the acquisition of UE based network performance measurements.

Low-mobility UE devices whose location area matches the targeted area scope of UE based network performance measurements may be more relevant than high-mobility UE devices which do not remain in the area for a sufficient length of time to allow collection of network performance measurements therefrom. Therefore, the present invention may be operative to exclude such devices from consideration during the acquisition of UE based network performance measurements. The present invention may also be operative to cause a RAN not to configure radio measurements reports from those UE devices.

Optionally, some categories of UE devices (e.g. MTC) may not be selected. For example: (a) those time controlled devices which send data at some specific point in time and are not supposed to send data outside of the scheduled point in time; (b)small data transmissions devices (which are not relevant for MDT data collection targeting the network throughput). Further examples are extra low power consumption devices. These may not be selected or may be preferred for selection over other (e.g. MTC) devices (e.g. low mobility devices whose location area matches the targeted area scope of MDT for most of the time). In addition, MTC devices operative to perform non-human communications may be selected regardless of user consent and roaming characteristics.

Currently, there are no mechanisms to consider the type of UE device selected for MDT measurements configuration. Also, there are no mechanisms such as intelligent knowledge in the network to enhance the selection of UE devices from the collected traces because those cannot be linked to specific UE devices since the data is "anonymized" due to the presence of user location information therein.

Optionally, the at least one mobile radio communication device characteristic may comprise an operational characteristic of the mobile radio communication device. Further optionally, the mobile radio communication device operational characteristic may be configured towards the mobile radio communication device. Yet further optionally, the configuration may be implemented by way of Open Mobile Alliance Device Management (OMA DM) signalling.

Optionally, the at least one mobile radio communication device characteristic may comprise data identifying a mobile radio communication device type. Further optionally, the data identifying a mobile radio communication device type may be included in a Type of Allocation Code (TAC) information field of mobile equipment identity information (for example, so-called International Mobile Equipment Identity (IMEI)) and, yet further optionally, the data identifying a mobile radio communication device type may comprise data specifying that Machine-Type Communications (MTC) mobile radio communications devices are not to be included in acquisition of network performance measurements by the network device.

Optionally, the mobile radio communication device from which said network device should acquire network performance measurements may be selected if each of a plurality of parameters of that mobile radio communication device has a corresponding specified selection parameter from a plurality of specified selection parameters.

The network device may be operative to retrieve from the at least one mobile radio communications device information indicative of at least one of: an access stratum (AS) capability of said mobile radio communication device; said at least one mobile radio communication device operational characteristic; and said mobile radio communication device type. Further, the device may be operative to retrieve the information upon initial registration of the mobile radio communication device with the network device. Also, the device may be operative to store obtained indicative information, further wherein the information is selectable to form at least a part of the selection parameters. Further optionally, the device may be operative to transmit the stored obtained indicative information to a further network device in a UE mobility process.

Optionally, the network device may comprise first and second operational elements, wherein the first operational element is operative to forward to the second operational element an instruction comprising the selection parameters, further wherein, responsive to receipt of the instruction, the second operational element invokes collection of network performance measurements from one or more mobile radio communication devices having parameters matching the selection parameters. In an optional arrangement, the instruction comprising the selection parameters may comprise a trace session activation command and, further optionally, information relating to each selection parameter may comprise at least one flag in the trace session activation command.

Optionally, the operational characteristic of the mobile radio communication device may relate to at least one of: mobility of the mobile radio communication device; call and/or data traffic of the mobile radio communication device; memory capacity of the mobile radio communication device; and battery life of the mobile radio communication device. Further optionally, the mobile radio communication device selection does not take into account either user consent or a roaming characteristic of the device.

Optionally, the network device may be arranged such that the network performance measurements are undertaken in a Minimization of Drive Testing (MDT) process.

According to another example, there is provided a mobile radio communication device operative for configuration by the network device described above.

Optionally, the mobile radio communication device may be operative to deactivate a capability to partake in network performance measurements and, further optionally, may be operative to provide, to the mobile radio communication network device, information indicative of at least one of: an access stratum (AS) capability of said mobile radio communication device; the at least one mobile radio communication device operational characteristic; and the mobile radio communication device type. Yet further optionally, the mobile radio communication device may be operative to set the at least one device operational characteristic as information in a radio capability information module thereof.

According to another example, there is provided a mobile radio communication device selection signal for network performance measurements, the signal comprising data identifying at least one mobile radio communication device characteristic.

Optionally, the at least one mobile radio communication device characteristic may comprise an operational characteristic of the mobile radio communication device. Further optionally, the at least one mobile radio communication device characteristic may comprise data identifying a mobile radio communication device type. Yet further optionally, the mobile radio communication device type may be included in a Type of Allocation Code (TAC) information field of mobile equipment identity information (for example, so-called International Mobile Equipment Identity (IMEI)).

Optionally, the signal may comprise an OMA DM signal.

According to a further example, there is provided a method of collecting network performance measurements, comprising: selecting at least one mobile radio communications device from which network performance measurements are to be collected if at least one parameter of the at least one mobile radio communication device corresponds to at least one specified selection parameter, wherein the at least one specified selection parameter comprises data identifying at least one mobile radio communication device characteristic.

Optionally, the at least one mobile radio communication device characteristic may comprise an operational characteristic of said mobile radio communication device. Further optionally, the mobile radio communication device operational characteristic may be configured towards the mobile radio communication device and, yet further optionally, the configuration may be implemented by way of OMA DM signalling.

Optionally, the at least one mobile radio communication device characteristic may comprise data identifying a mobile radio communication device type. Further optionally, the mobile radio communication device type may be included in a Type of Allocation Code (TAC) information field of mobile equipment identity information (for example, so-called International Mobile Equipment Identity (IMEI)). Yet further optionally, mobile radio communication device selection does not take into account either user consent or a roaming characteristic of the device.

Optionally, the data identifying a mobile radio communication device type may comprise data specifying that Machine-Type Communications (MTC) mobile radio communications devices are not to be included in acquisition of network performance measurements by the network device.

Optionally, the method may further comprise selecting a mobile radio communication device from which the network device should acquire network performance measurements if each of a plurality of parameters of that mobile radio communication device has a corresponding specified selection parameter from a plurality of specified selection parameters.

Optionally, the method may further comprise the step of retrieving, from the at least one mobile radio communications device, information indicative of at least one of: an access stratum (AS) capability of the mobile radio communication device; the at least one mobile radio communication device operational characteristic; and the mobile radio communication device type. Further optionally, the retrieving step may be implemented upon initial registration of the mobile radio communication device with the network device. Yet further optionally, the method may comprise the step of storing obtained indicative information, wherein the information is selectable to form at least a part of the selection parameters.

Optionally, the method may further comprise the step of transferring the stored obtained indicative information to a further network entity.

Optionally, the method may further comprise the steps of forwarding, from a first operational element to a second operational element, an instruction comprising the selection parameters and, responsive to receipt of the instruction, collecting network performance measurements from one or more mobile radio communication devices having parameters matching said selection parameters. Further optionally, the instruction comprising said selection parameters may comprise a trace session activation command and, yet further optionally, information relating to each selection parameter may comprise at least one flag in the trace session activation command.

Optionally, the at least one mobile radio communication device operational characteristic may relate to at least one of: mobility of the mobile radio communication device; call and/or data traffic of the mobile radio communication device; memory capacity of the mobile radio communication device; and battery life of the mobile radio communication device.

Optionally, the network performance measurements may be undertaken in a Minimization of Drive Testing (MDT) process.

According to another example, there is provided a method of configuring a mobile radio communication device using a network device operating using the method described above.

Optionally, the method may further comprise the mobile radio communication device operating to deactivate a capability to partake in network performance measurements and, further optionally, may comprise providing, from the mobile radio communication device to the mobile radio communication network device, information indicative of at least one of: an access stratum (AS) capability of the mobile radio communication device; the at least one mobile radio communication device operational characteristic; and the mobile radio communication device type.

Optionally, the method may further comprise setting the at least one device operational characteristic as information in a radio capability information module of the mobile radio communication device.

According to another example, there is provided a computer program, computer program product or computer readable medium, comprising instructions for enabling a mobile radio communication network device to carry out at least one of the methods described above.

According to another example, there is provided a mobile radio communication network device and/or a mobile radio communication device including a computer program, computer program product or computer readable medium as described above.

According to another example, there is provided a mobile radio communications system comprising: a mobile radio communications network device operative to collect network performance measurements and to select at least one mobile radio communications device from which network performance measurements are to be collected if at least one parameter of the at least one mobile radio communication device corresponds to at least one specified selection parameter, wherein the at least one specified selection parameter comprises data identifying at least one mobile radio communication device characteristic; and a mobile radio communication device operative for configuration by said network device.

Optionally, the at least one mobile radio communication device characteristic comprises an operational characteristic of the mobile radio communication device. Further optionally, the mobile radio communication device operational characteristic may be configured towards the said mobile radio communication device. Yet further optionally, the device characteristic may comprise data identifying a mobile radio communication device type.

Optionally, the mobile radio communication device type may be included in a Type of Allocation Code (TAC) information field of mobile equipment identity information (for example, so-called International Mobile Equipment Identity (IMEI)).

Optionally, the data identifying a mobile radio communication device type may comprise data specifying that Machine-Type Communications (MTC) mobile radio communications devices are not to be included in acquisition of network performance measurements by the network device.

Optionally, data identifying a mobile radio communication device type may comprise data specifying that Machine-Type Communications (MTC) mobile radio communications devices are included in acquisition of network performance measurements by said network device without consideration of user consent or a roaming characteristic of the device.

Optionally, the mobile radio communication device from which the network device should acquire network performance measurements may be selected if each of a plurality of parameters of that mobile radio communication device has a corresponding specified selection parameter from a plurality of specified selection parameters.

Optionally, the network device may be operative to retrieve from the at least one mobile radio communications device information indicative of at least one of: an access stratum (AS) capability of the mobile radio communication device; the at least one mobile radio communication device operational characteristic; and the mobile radio communication device type.

Optionally, the network device may be operative to retrieve the information upon initial registration of the mobile radio communication device with the network device.

Optionally, the network device may be operative to store obtained indicative information, further wherein the information is selectable to form at least a part of said selection parameters.

Optionally, the network device may be operative to transfer the stored obtained indicative information.

Optionally, the system may comprise first and second operational elements, wherein the first operational element is operative to forward to the second operational element an instruction comprising the selection parameters, further wherein, responsive to receipt of the instruction, the second operational element invokes collection of network performance measurements from one or more mobile radio communication devices having parameters matching the selection parameters.

Optionally, the instruction comprising said selection parameters may comprise a trace session activation command and, further optionally, wherein information relating to each selection parameter may comprise at least one flag in the trace session activation command. Yet further optionally, flag information relating to the mobile radio communication device type may be included in a Type of Allocation Code (TAC) information field and, still further optionally, the mobile radio communication device type may be conveyed in said TAC information field.

Optionally, the at least one operational characteristic of the mobile radio communication device may relate to at least one of: mobility of the mobile radio communication device; call and/or data traffic of the mobile radio communication device; memory capacity of the mobile radio communication device; and battery life of the mobile radio communication device.

Optionally, the system may be arranged such that the network performance measurements are undertaken in a Minimization of Drive Testing (MDT) process.

Optionally, the mobile radio communication device is operative to deactivate a capability to partake in network performance measurements.

Optionally, the mobile radio communication device may be operative to provide, to the mobile radio communication network device, information indicative of at least one of: an access stratum (AS) capability of the mobile radio communication device; the at least one mobile radio communication device operational characteristic; and the mobile radio communication device type.

Optionally, the mobile radio communication device may be operative to set the at least one device operational characteristic as information in a radio capability information module thereof.

### Advantageous Effects of Invention

According to the present invention, it is possible to provide a MDT process offering advantages over known processes and, in particular, to a mobile radio communications network device, and a mobile radio communications device, arranged to implement such a MDT process in a manner exhibiting advantages over known devices, and to related operational methods.

### Brief Description of Drawings

[Fig. 1]
   Fig. 1 is a sequence diagram illustrating a schematic process signalling flow for a current MDT process in an LTE network.
[Fig. 2]
   Fig. 2 is a sequence diagram illustrating a schematic process signalling flow for a current MDT process in a UMTS network.
[Fig. 3]
   Fig. 3 is a sequence diagram illustrating a schematic process signalling flow for a current process for selection of UE devices for participation in an MDT process.
[Fig. 4A]

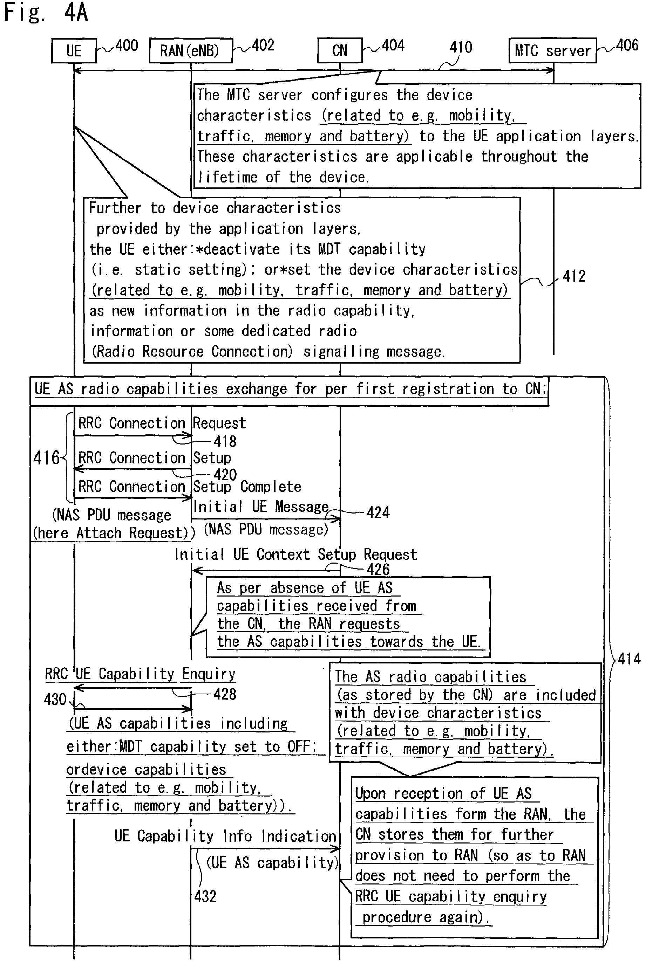

   Fig. 4A is a sequence diagram illustrating a part of a schematic process signalling flow for a process in accordance with a first one or more embodiments of the present invention for selection of UE devices for participation in an MDT process.
[Fig. 4B]

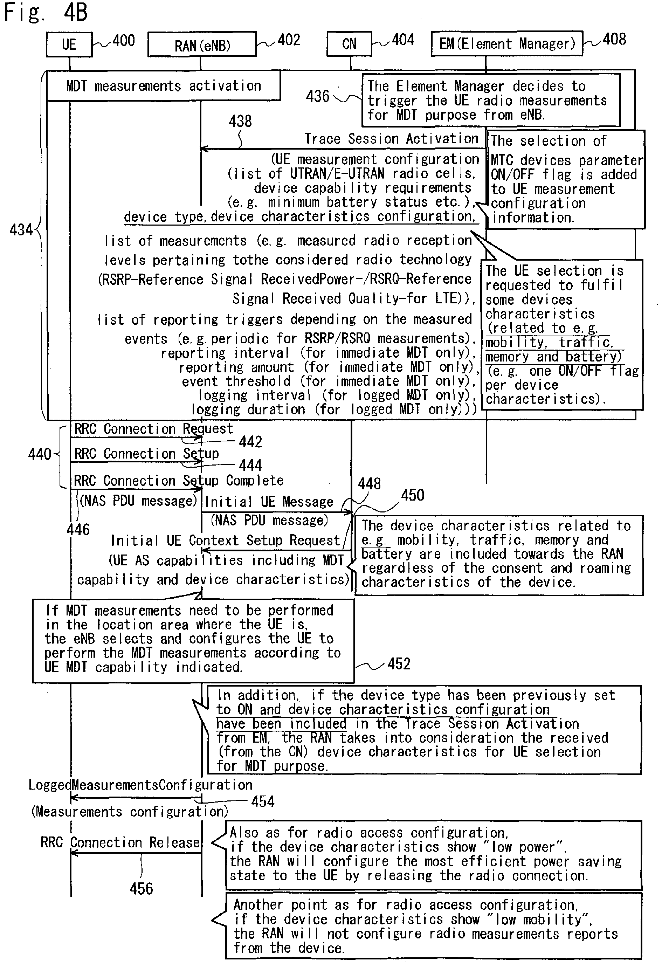

   Fig. 4B is a sequence diagram illustrating the remaining part of a schematic process signalling flow for a process in accordance with a first one or more embodiments of the present invention for selection of UE devices for participation in an MDT process.
[Fig. 5]

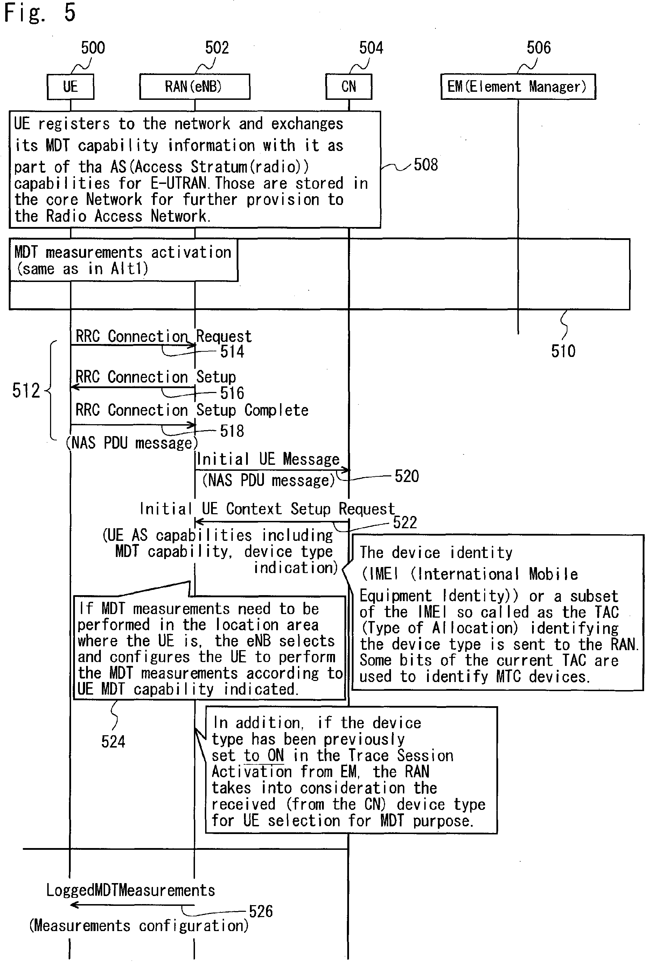

   Fig. 5 is a sequence diagram illustrating a schematic process signalling flow for a process in accordance with a second one or more embodiments of the present invention for selection of UE devices for participation in an MDT process.
[Fig. 6]

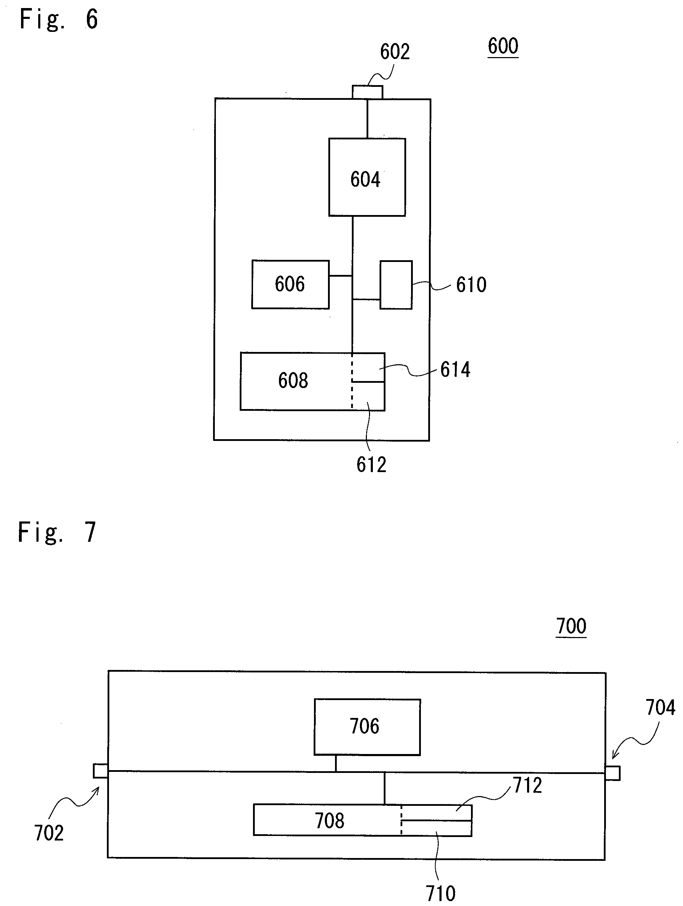

   Fig. 6 is a schematic illustration of mobile radio communications User Equipment (UE) according to first or second one or more embodiments of the present invention.
[Fig. 7]
   Fig. 7 is a schematic illustration of a mobile radio communications network device according to first or second one or more embodiments of the present invention.

### Description of Embodiments

One or more embodiments of the invention are described further hereinafter, by way of example only, with reference to the accompanying drawings.

Fig. 1 schematically illustrates a number of devices of a mobile radio communications network, namely: an Element Manager (EM) 100; a Mobility Management Entity (MME) 102; an evolved NodeB (eNB) 104; a number of user equipment (UE) devices UE1 (106(1)) to UEn (106(n)); and a Trace Collection Entity (TCE) 108 (which, in an optional arrangement, may be co-located with the EM, i.e. implemented on the same physical entity or machine). Also illustrated are the flow of data and/or messages between these devices and operations performed by the devices during a current MDT process in an LTE network.

The EM 100 comprises a network management entity whose role is to configure functions in the network elements, including the UE MDT measurements in the eNB 104. The eNB 104 (or LTE base station when E-UTRAN is used as the radio access) is responsible for selecting the UE devices for participating in MDT measurements collections and configuring the MDT measurements towards UEs, i.e. the radio network sends Radio Resource Configuration and Measurement Configuration which are radio level signalling towards the UE. In this illustrative example, the UE comprises terminal equipment or a device/handset which is capable of performing radio measurements for the purpose of an MDT process.

Initially, the EM 100 transmits a Trace Session Activation request 110 (including UE measurement configuration) to the eNB 104. The UE measurement configuration can include information indicative of the UE device capabilities, i.e. the types of UE device which the EM 100 has specified should be included within the Trace Session.

Responsive to reception of the trace session activation request 110, the eNB 104 implements a Trace Session and saves the trace parameters 112.

The eNB 104 is also operative to retrieve 114 UE device capabilities from the UEs 106(1) to 106(n). Upon receipt of the UE device capabilities for UEs 106(1) to 106(n), the eNB 104 selects 116 the UEs 106(1) to 106(n) from which measurements will be collected as part of the MDT process. This selection is based upon device capability requirements which have been received from the EM 100 as part of the UE measurement configuration data. The eNB 104 then sends a first Trace Activation/UE measurement configuration signal 118(1) to a first selected UE 106(1), i.e. a UE device which has capabilities which match those specified by the EM 100 and which has been selected by the eNB 104 because of this. The eNB 104 is operative to send further Trace Activation/UE measurement configuration signals 118(n), if appropriate, to each of the one or more remaining UEs 106(2) to 106(n) selected by the eNB 104 whose capabilities match those specified by the EM 100.

After the first selected UE 106(1) has received the Trace Activation/UE measurement configuration signal 118(1) from the eNB 104, the UE 106(1) sends a UE measurement report 120(1) to the eNB 104 using the Radio Resource Control (RRC). Responsive to receipt of UE measurement report 120(1) at the eNB 104, the MME 102 retrieves 122(1) the permanent UE (subscriber) identity MDT configuration (i.e. International Mobile Subscriber Identity (IMSI) or International Mobile Equipment Identity (Software Version) (IMEI (SV))). The retrieved permanent UE (subscriber) identity MDT configuration for the given trace session is forwarded 124(1) to the TCE 108 in case the E-UTRAN does not have the permanent UE identity. The eNB 104 is operative to store 126(1) the UE measurements to a Trace Records storage module.

Steps 120(n), 122(n), 124(n) and 126(n) corresponding to those steps 120(1), 122(1), 124(1), and 126(1) respectively are carried out in relation to each of the one or more remaining UEs 106(2) to 106(n) selected by the eNB 104 whose capabilities match those specified by the EM 100.

Upon completion of the steps 120(1) to 120(n), 122(1) to 122(n), 124(1) to 124(n) and 126(1) to 126(n), the eNB 104 forwards a Trace Record report 128 to the TCE 108.

Responsive to receipt of the Trace Record report from the eNB 104, the TCE 108 is operative to combine 130 the Trace Records with permanent UE identities based on Trace Reference and Trace Recording Session Reference.

A similar process is now described with reference to Fig. 2 which illustrates flow of data and/or messages between devices of a mobile radio communications network and operations performed by the devices during a current MDT process in an UMTS network.

Fig. 2 schematically illustrates a number of devices of the mobile radio communications network, namely: an Element Manager (EM) 200; a Radio Network Controller (RNC) 202; a number of user equipment (UE) devices UE1 (204(1)) to UEn (204(n)); and a Trace Collection Entity (TCE) 206 (which, in an optional arrangement, may be co-located with the EM, i.e. implemented on the same physical entity or machine). As mentioned above, also illustrated are the flow of data and/or messages between these devices and operations performed by the devices during the MDT process.

The EM 200 comprises a network management entity whose role is to configure functions in the network elements, including the UE MDT measurements towards the RNC 202. The RNC 202 (or UMTS base station when UTRAN is used as the radio access) is responsible for selecting the UE devices for participating in MDT measurements collections and configuring the MDT measurements towards UEs, i.e. the radio network sends Radio Resource Configuration and Measurement Configuration which are radio level signalling towards the UE. In this illustrative example, the UE comprises terminal equipment or a device/handset which is capable of performing radio measurements for the purpose of an MDT process.

Initially, the EM 200 transmits a Trace Session Activation request 208 (including UE measurement configuration) to the RNC 202. The UE measurement configuration can include information indicative of the UE device capabilities, i.e. the types of UE device which the EM 200 has specified should be included within the Trace Session.

Responsive to reception of the trace session activation request 208, the RNC implements a Trace Session and saves the trace parameters 210.

The RNC 202 is also operative to retrieve 212 UE device capabilities from the UEs 204(1) to 204(n). Upon receipt of the UE device capabilities for UEs 204(1) to 204(n), the RNC 202 selects 214 the UEs 204(1) to 204(n) from which measurements will be collected as part of the MDT process. This selection is based upon device capability requirements which have been received from the EM 200 as part of the UE measurement configuration data. The RNC 202 then sends a first Trace Activation/UE measurement configuration signal 216(1) to a first selected UE 204(1), i.e. a UE device which has capabilities which match those specified by the EM 200 and which has been selected by the RNC 202 because of this. The RNC 202 is operative to send further Trace Activation/UE measurement configuration signals 216(n), if appropriate, to each of the one or more remaining UEs 204(2) to 204(n) selected by the RNC 202 whose capabilities match those specified by the EM 200.

After the first selected UE 204(1) has received the Trace Activation/UE measurement configuration signal 216(1) from the RNC 202, the UE 204(1) sends a UE measurement report 218(1) to the RNC 202 using the Radio Resource Control (RRC). Responsive to receipt of UE measurement report 218(1) at the RNC 202, the RNC 202 stores 220(1) the UE measurements to a Trace Records storage module.

Steps 216(n), 218(n), and 220(n) corresponding to those steps 216(1), 218(1), and 220(1) respectively are carried out in relation to each of the one or more remaining UEs 204(2) to 204(n) selected by the RNC 202 whose capabilities match those specified by the EM 200.

Upon completion of the steps 216(1) to 216(n), 218(1) to 218(n), and 220(1) to 220(n), the RNC 202 forwards a Trace Record report 222 to the TCE 206.

Responsive to receipt of the Trace Record report from the RNC 202, the TCE 206 is operative to combine 224 the Trace Records with permanent UE identities based on Trace Reference and Trace Recording Session Reference.

Fig. 3 illustrates a schematic process signalling flow for a current process for selection of UE devices for participation in an MDT process. It is derived from SA5 TS 32.422 for UE selection for MDT purpose.

A number of devices of a mobile radio communications network are illustrated along with the flow of data and/or messages between those devices during the process for selection of UE devices for participation in an MDT process. These devices comprise: a UE 300; a RAN (eNB) 302; a Core Network (CN) 304 and an EM 306.

When UE 300 registers to the CN 304, it forwards 308 its MDT capability information to the core network as part of the Access Stratum (AS) capabilities for E-UTRAN. This information is stored in the CN.

An MDT measurements activation process 310 comprises the steps of the EM 306 triggering 312 the UE radio measurements for the MDT process from the RAN (eNB) 302. The EM 306 is operative to send a Trace Session Activation command 314 to the eNB 302. The command includes UE measurement configuration information comprising, in the illustrated example: a list of UTRAN/E-UTRAN radio cells; device capability requirements (e.g. minimum battery status etc.); a list of measurements (e.g. measured radio reception levels pertaining to the considered radio technology (Reference Signal Received Power (RSRP)/Reference Signal Received Quality (RSRQ) for LTE)); a list of reporting triggers depending on the measured events (e.g. periodic for RSRP/RSRQ measurements); a reporting interval (for immediate MDT only); a reporting amount (for immediate MDT only); an event threshold (for immediate MDT only); a logging interval (for logged MDT only); a logging duration (for logged MDT only).

Immediate and Logged MDT have been described previously.

When the UE 300 wishes to establish connection with the RAN (eNB) 302 it initiates a RRC Connection Set-up process 316 comprising steps 318, 320 and 322. Initially, the UE 300 transmits a RRC Connection Request 318 to the eNB 302. The RRC Connection Request 318 contains the UE identity (IMSI, TMSI, etc) and the RRC establishment cause (e.g. low priority access, as in the illustrated example).

Responsive to reception of the RRC Connection Request 318, the eNB 302 transmits an RRC Connection Set-up message 320 to the UE 300. The RRC Connection Set-up message 320 comprises parameters required to establish a dedicated channel (DCH) between the UE 300 and eNB 302.

Upon reception of the RRC Connection Set-up message 320, the UE 300 compares the information element (IE) values and, if the values are identical, transmits a RRC Connection Set-up Complete message 322 via the DCH to the eNB. This RRC Connection Set-up Complete message 322 is conveyed by Non-Access Stratum Packet Data Units (NAS-PDUs).

A Trace Recording Session is started at the eNB 302 when it receives trace control and configuration parameters (UE AS capabilities including MDT capability) via an Initial UE Context Setup Request message 326 from the CN 304 (i.e. a trace session activation request). Such an Initial UE Context Setup Request message 326 is sent by the CN 304 to the eNB 302 in response to receipt of an Initial UE Message 324 from the eNB 302. That is, if MDT measurements need to be performed in the area where the UE 300 is, the eNB 302 selects and configures 328 the UE 300 to perform the MDT measurements according to UE MDT capability indicated. The UE 300 is instructed to start a logged MDT process upon receipt of an instruction 330 from the eNB 302.

In the illustrated example, a trace recording session of logged MDT shall be started in the eNB 302 for a given UE 300 when a trace session activation request (i.e. the Initial UE Context Setup Request 326) is received from the CN 304 for the UE 300 and the MDT UE selection conditions are satisfied for the UE 300. The eNB 302 is operative to configure the corresponding MDT RRC measurements at the UE 300. If selection conditions are not satisfied, the eNB 302 is operative to store the trace control and configuration parameters, and forward these parameters when the UE hands-over to other eNBs.

In the above described processes, UE devices are selected for participation in MDT processes based on the attached RAN (i.e. location of the device) and the MDT capability of the UE (i.e. the device needs to be MDT capable).

There are no mechanisms to consider the type of UE device selected for MDT measurements configuration. Also, there are no mechanisms such as intelligent knowledge in the network to enhance the selection of UE devices from the collected traces because those cannot be linked to specific UE devices since the data is "anonymized" due to the presence of user location information therein.

It will be appreciated that, when performing MDT processes, if MTCs are considered in addition to non-MTC UE devices (i.e. current situation as described above in relation to Figs. 1 to 3), the amount of data collected can be very large. The network does not distinguish between MTCs and non-MTCs when selecting devices for MTD processes. Data collected from MTC devices during MDT processes is generally less useful than that collected from non-MTC devices. It follows, therefore, that a large amount of data collected is not useful (generally, the portion corresponding to that collected from the MTC devices). Consequently, a large amount of signalling overhead is potentially wasted for communication with MTC devices.

Figs. 4A and 4B illustrate a schematic process signalling flow for a process in accordance with a first one or more embodiments of the present invention for selection of UE devices for participation in an MDT process.

A number of devices of a mobile radio communications network are illustrated along with the flow of data and/or messages between those devices during the process for selection of UE devices for participation in an MDT process. These devices comprise: a UE 400; a RAN (eNB) 402; a CN 404; an Machine-Type Communication (MTC) server 406; and an EM 408.

In general, the network is operative to consider certain characteristics of devices related to machine type communications (such as, for example, data, memory, battery, power, mobility) to enable UE radio configuration and/or UE-based network performance measurements data collection.

The MTC server 406 is operative to configure 410 the device characteristics (such as, for example, mobility, traffic, memory and battery) in application layers (e.g. NAS layer using Open Mobile Alliance Device Management (OMA DM)) of the UE 400. These characteristics are applicable throughout the lifetime of the device.

Further to device characteristics provided by the application layers, the UE device 400 is operative 412 to deactivate its MDT capability (i.e. static setting). In an optional arrangement, which is also illustrated in Fig. 4A, the UE device 400 is operative 412 to set the device characteristics as new information in a radio capability information module of the UE 400. The UE 400 is operative to include in a dedicated radio signalling message (e.g. an RRC message) an indication that the UE 400 has deactivated its MDT capability and/or an indication of the device characteristics of the UE 400.

A UE AS capabilities exchange 414 between the UE 400, RAN (eNB) 402 and CN 404, will now be described. The UE AS capabilities exchange 414 occurs at first registration of the UE 400 with the CN 404.

During this first registration process, the UE 400 is operative to establish a connection with the RAN (eNB) 402 by initiating a RRC Connection Set-up process 416 comprising steps 418, 420 and 422. Initially, the UE 400 transmits a RRC Connection Request 418 to the RAN (eNB) 402. The RRC Connection Request 418 contains the UE identity (IMSI, TMSI, etc) and the RRC establishment cause (e.g. low priority access, as in the illustrated example).

Responsive to reception of the RRC Connection Request 418, the RAN (eNB) 402 transmits an RRC Connection Set-up message 420 to the UE 400. The RRC Connection Set-up message 420 comprises parameters required to establish a dedicated channel (DCH) between the UE 400 and RAN (eNB) 402.

The RRC Connection Set-up message 420 configures the signalling radio bearer to the UE so that the UE transmits a RRC Connection Set-up Complete message 422 via the DCH to the RAN (eNB) 402. This RRC Connection Set-up Complete message 422 is conveyed by Non-Access Stratum Packet Data Units (NAS-PDUs) Attach request. This is the so-called NAS message for first UE registration to Core Network.

An Initial UE Context Setup Request message 426 is sent by the CN 404 to the RAN (eNB) 402 in response to receipt of an Initial UE Message 424 from the RAN (eNB) 402.

In the process illustrated in Fig. 4A, the CN 404 does not provide the RAN (eNB) 402 with the UE AS capabilities. Therefore, in order to obtain such UE AS capabilities, the RAN (eNB) 402 sends an RRC UE Capability Enquiry request 428 to the UE 400. Responsive to receipt of the RRC UE Capability Enquiry request 428, the UE 400 transmits a message 430 containing data identifying the UE AS capabilities of the UE 400. The message 430 also includes either data identifying whether or not the MDT capability of the UE 400 has been disabled (i.e. if it has been set to "OFF"), or data identifying the device characteristics of the UE 400 (such as, for example, mobility, traffic, memory and battery). In an optional arrangement, the message may include both of these sets of data.

Upon receipt of this data (i.e. via message 430) from UE 400, the RAN (eNB) 402 forwards it to the CN 404 by way of a UE capability Info Indication message 432. Such data (i.e. data identifying the UE AS capabilities of the UE 400, data identifying whether or not the MDT capability of the UE 400 has been disabled, and/or data identifying the device characteristics of the UE 400) is stored in the CN 404 for future retrieval. Thus, when the RAN (eNB) 402 requires such data in the future, it does not need to perform a RRC UE Capability Enquiry procedure again, but rather can obtain the information by requesting it from the CN 404.

In the illustrated arrangement of Fig. 4B, an MDT measurements activation process 434 comprises the steps of the EM 408 triggering 436 the UE radio measurements for the MDT process from the RAN (eNB) 402. The EM 408 is operative to send a Trace Session Activation command 438 to the RAN (eNB) 402. The command 438 includes UE measurement configuration information comprising, in the illustrated example: a list of UTRAN/E-UTRAN radio cells; device capability requirements (e.g. minimum battery status etc.); a specification of the UE device type (e.g. MTC and/or non-MTC) to be selected for the network performance measurement; a specification of at least one UE device characteristic, i.e. a characteristic which the UE device should have if it is to be included in the network performance measurement (such as, for example, mobility, traffic, memory and battery); a list of measurements (e.g. measured radio reception levels pertaining to the considered radio technology (Reference Signal Received Power (RSRP)/Reference Signal Received Quality (RSRQ) for LTE)); a list of reporting triggers depending on the measured events (e.g. periodic for RSRP/RSRQ measurements); a reporting interval (for immediate MDT only); a reporting amount (for immediate MDT only); an event threshold (for immediate MDT only); a logging interval (for logged MDT only); a logging duration (for logged MDT only).

The UE device type (i.e. MTC and/or non-MTC) to be selected is indicated by a MTC devices parameter flag which is included in the Trace Session Activation command 438. The MTC devices parameter flag is set to "ON" if the network performance measurements should include MTC devices and to "OFF" if MTC devices are not to be included in the network performance measurements. In an optional arrangement, the MTC devices parameter flag is set to "OFF" if the network performance measurements should include MTC devices and to "ON" if MTC devices are not to be included in the network performance measurements.

Each UE device characteristic which the UE device should have if it is to be included in the network performance measurement is indicated by a corresponding UE device characteristic parameter flag which is included in the Trace Session Activation command 438. Each UE device characteristic parameter flag is set to "ON" if the network performance measurements should include UE devices having characteristics corresponding to that of the UE device characteristic parameter flag. Otherwise, if a particular device characteristic is not to be considered in the network performance measurements, then the UE device characteristic parameter flag is set to "OFF".

When the UE 400 wishes to establish connection with the RAN (eNB) 402 it initiates a RRC Connection Set-up process 440 comprising steps 442, 444, 446. Initially, the UE 400 transmits a RRC Connection Request 442 to the RAN (eNB) 402. The RRC Connection Request 442 contains the UE identity (IMSI, TMSI, etc) and the RRC establishment cause.

Responsive to reception of the RRC Connection Request 442, the RAN (eNB) 402 transmits an RRC Connection Set-up message 444 to the UE 400. The RRC Connection Set-up message 320 comprises parameters required to establish a dedicated channel (DCH) between the UE 400 and RAN (eNB) 402.

Upon reception of the RRC Connection Set-up message 444, the UE 400 compares the information element (IE) values and, if the values are identical, transmits a RRC Connection Set-up Complete message 446 via the DCH to the RAN (eNB) 402. This RRC Connection Set-up Complete message 446 is conveyed by Non-Access Stratum Packet Data Units (NAS-PDUs).

A Trace Recording Session is started at the RAN (eNB) 402 when it receives trace control and configuration parameters (UE AS capabilities including MDT capability, and further parameters comprising device characteristics and/or device type) via an Initial UE Context Setup Request message 450 from the CN 404 (i.e. a trace session activation request). Such an Initial UE Context Setup Request message 450 is sent by the CN 404 to the RAN (eNB) 402 in response to receipt of an Initial UE Message 448 from the RAN (eNB) 402. That is, if MDT measurements need to be performed in the area where the UE 400 is, the RAN (eNB) 402 selects and configures 452 the UE 400 to perform the MDT measurements according to UE MDT capability and device characteristics indicated. The UE 400 is instructed to start a logged MDT process upon receipt of an instruction 454 from the RAN (eNB) 402.

In the illustrated arrangement, the device characteristics such as, for example, mobility, traffic, memory, and battery, are included in the Initial UE Context Setup Request message 450 regardless of the consent and roaming characteristics of the device. In addition, if the device type has been set to "ON" and device characteristics have been specified in the Trace Session Activation command 438, the RAN (eNB) 402 is operative to take into consideration the device characteristics for UE device selection (for a MDT process), where those device characteristics have been provided to the RAN (eNB) 402 from the CN 404 in the Initial UE Context Setup Request message 450.

If one of the specified device characteristics is "low power", the RAN (eNB) 402 is operative, once it has performed the network performance measurements (i.e. trace session), to leave a relevant UE device which formed part of the session in the most efficient power saving state. The RAN (eNB) 402 is operative to implement this power saving state in the relevant UE device by releasing the radio connection with the UE device by transmitting an RRC Connection Release command 456 to the relevant UE device.

Further, if one of the specified device characteristics is "low mobility", the RAN (eNB) 402 is operative, once it has performed the network performance measurements (i.e. trace session), to leave a relevant UE device which formed part of the session in a state where radio measurement reports will not be supplied by the UE device. The RAN (eNB) 402 is operative to implement this state in the relevant UE device in the same manner as for the power saving state implementation, i.e. by releasing the radio connection with the UE device by transmitting the RRC Connection Release command 456 to the relevant UE device.

In Fig. 4B, a trace recording session of logged MDT shall be started in the RAN (eNB) 402 for a given UE 400 when a trace session activation request (i.e. the Initial UE Context Setup Request 450) is received from the CN 404 for the UE 400 and the MDT UE selection conditions are satisfied for the UE 400.

In the arrangement illustrated in Fig. 4B, an MTC devices parameter ON/OFF flag (aka device type flag) is included in UE measurement configuration information which is sent from the EM 408 towards the RAN (eNB) 402. If the aforementioned device type has been previously set to ON in the Trace Session Activation from EM 408 , the RAN (eNB) 402 takes into consideration the received device type information received from the CN 404 for UE selection for MDT purpose.

An MTC device characteristic parameter ON/OFF flag (e.g. low mobility ON/OFF, low traffic ON/OFF, low memory ON/OFF and low battery ON/OFF) is added to UE measurement configuration information from the EM 408 towards the RAN (eNB) 402. If an aforementioned parameter has been previously set to ON in the Trace Session Activation from EM 408, the RAN (eNB) 402 takes into consideration the received (from the CN) device characteristics for UE selection for MDT purpose.

The MTC server 406 is operative to configure the device characteristics to the UE application layers via OMA DM. Further to device characteristics as provisioned by the application layers, the UE 400 is operative to either: deactivate its MDT capability; or set the device characteristics as new information in the radio capability information further sent towards the RAN (eNB) 402. These device characteristics can be stored within the UE radio capabilities in the CN 404 at UE registration to the network.

As described previously, the specified UE device characteristics related to mobility, traffic, memory and battery are included by the CN 404 towards the RAN (eNB) 402 regardless of the consent and roaming characteristics of the device.

Fig. 5 illustrates a schematic process signalling flow for a process in accordance with a second one or more embodiments of the present invention for selection of UE devices for participation in an MDT.

A number of devices of a mobile radio communications network are illustrated along with the flow of data and/or messages between those devices during the process for selection of UE devices for participation in an MDT process. These devices comprise: a UE 500; a RAN (eNB) 502; a CN 504; and an EM 506.

When UE 500 registers to the CN 504, it forwards 508 its MDT capability information to the core network as part of the AS capabilities for E-UTRAN. This information is stored in the CN 504.

An MDT measurements activation process 510 of the illustrated arrangement is identical to the MDT measurements activation process 434 described in relation to Fig. 4B.

When the UE 500 wishes to establish connection with the RAN (eNB) 502 it initiates a RRC Connection Set-up process 512 comprising steps 514, 516 and 518. Initially, the UE 500 transmits a RRC Connection Request 514 to the RAN (eNB) 502.

Responsive to reception of the RRC Connection Request 514, the RAN (eNB) 502 transmits an RRC Connection Set-up message 516 to the UE 500. The RRC Connection Set-up message 516 comprises parameters required to establish a dedicated channel (DCH) between the UE 500 and RAN (eNB) 502.

Upon reception of the RRC Connection Set-up message 516, the UE 500 compares the IE values and, if the values are identical, transmits a RRC Connection Set-up Complete message 518 via the DCH to the RAN (eNB) 502. This RRC Connection Set-up Complete message 518 is conveyed by NAS-PDUs.

A Trace Recording Session is started at the RAN (eNB) 502 when it receives trace control and configuration parameters (UE AS capabilities including MDT capability and an indication of device type) via an Initial UE Context Setup Request message 522 from the CN 504 (i.e. a trace session activation request). Such an Initial UE Context Setup Request message 522 is sent by the CN 504 to the RAN (eNB) 502 in response to receipt of an Initial UE Message 520 from the RAN (eNB) 502. That is, if MDT measurements need to be performed in the area where the UE 500 is, the RAN (eNB) 502 selects and configures 524 the UE 500 to perform the MDT measurements according to UE MDT capability and device type indicated. The UE 500 is instructed to start a logged MDT process upon receipt of an instruction 526 from the RAN (eNB) 502.

In the above described process of Fig. 5, UE devices are selected for participation in MDT processes based on the attached RAN (i.e. location of the device), the MDT capability of the UE (i.e. the device needs to be MDT capable) and the device type (e.g. MTC and/or non-MTC).

In the illustrated arrangement of Fig. 5, the device type is identified by way of device identity information, i.e. IMEI or a subset of the IMEI (Type of Allocation (TAC). That is, the device identity (IMEI) or the subset thereof (TAC) are sent by the CN 504 to the RAN (eNB) 502. Optionally, bits of the current TAC are used to identify MTC devices. Further optionally, the encoding of the TAC to identify MTC devices can be provided in the most significant digits of the information.

In the above described arrangements of Figs. 4A, 4B and 5, EM is operative to control whether or not some categories of devices (e.g. MTC) are selected for an MDT process. As described, this is implemented by adding a configuration parameter in the Trace Session Activation message towards the RAN. The RAN may then operate to carry out the remainder of one of the processes described in Figs. 4A and 4B, or Fig. 5.

With reference to Fig. 6 there is provided a schematic illustration of a mobile radio communications device UE 600 in the form of a mobile phone handset and having a standard air interface comprising antenna 602 and reception/transmission 604 functionally connected within the handset to memory storage 606, a processor 608 and a user interface 610.

Within the illustrated embodiment, the processor 608 includes an MDT capability deactivation function 612 which is operative to deactivate the MDT capability of the UE 600. The processor 608 also includes device characteristics confirmation function 614 which is operative to include the device characteristics (such as, for example, mobility, traffic, memory and battery) as new information in the radio capability information or some dedicated radio (RRC) signalling message.

The present invention also provides for a radio communication network device 700 arranged, for example, with an interface 702 to a Radio Network Controller and an interface 704 to a GSM (Global System for Mobile communications) network via a Base Station Controller (BSC), wherein the network device 700 includes memory 706 and a processor 708 in which the processor 708 can include a device type identifier function 710 for adding, to UE measurement configuration information, a specification of the UE device type (e.g. MTC and/or non-MTC) to be selected for the network performance measurement.

Further, the processor 708 can include a device characteristic parameter function 712 for adding, UE measurement configuration information, a specification of at least one UE device characteristic, i.e. a characteristic which the UE device should have if it is to be included in the network performance measurement (such as, for example, mobility, traffic, memory and battery).

The network device 700 is optionally further operative to store, within the UE radio capabilities, UE device characteristics obtained from the UE device at UE registration to the network.

Of course, it should be appreciated that the present invention is not restricted to the details of the forgoing description and can be employed, as appropriate, in relation to any mobile radio communications network optimisation systems, devices and methods.

For example, the present invention can be materialized by a program for causing a computer such as a CPU (Central Processing Unit) to execute the processes shown in Figs. 4A, 4B and 5.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM, CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

### Reference Signs List

- 100, 200, 306, 408, 506: EM
- 102: MME
- 104: eNB
- 106,204,300,400,500: UE
- 108,206,: TCE
- 202: RNC
- 302, 402,: 502 RAN (eNB)
- 304, 404,: 504 CN
- 406: MTC SERVER
- 600: MOBILE RADIO COMMUNICATIONS DEVICE
- 602: ANTENNA
- 604: RECEPTION/TRANSMISSION
- 606: MEMORY STORAGE
- 608, 708: PROCESSOR
- 610: USER INTERFACE
- 612: MDT CAPABILITY DEACTIVATION FUNCTION
- 614: DEVICE CHARACTERISTICS CONFIRMATION FUNCTION
- 700: RADIO COMMUNICATION NETWORK DEVICE
- 702,704: INTERFACE
- 706: MEMORY
- 710: DEVICE TYPE IDENTIFIER FUNCTION
- 712: DEVICE CHARACTERISTIC PARAMETER FUNCTION

## Claims

1. A mobile radio communications network device (700) adapted to collect network performance measurements and to select at least one mobile radio communications device from which network performance measurements for Minimization of Drive Testing, MDT, are to be collected if at least one parameter of said at least one mobile radio communication device corresponds to at least one specified selection parameter, wherein said at least one specified selection parameter comprises data identifying at least one mobile radio communication device characteristic,
wherein said at least one mobile radio communication device characteristic comprises data identifying a mobile radio communication device type, and
wherein said data identifying a mobile radio communication device type is included in a Type Allocation Code, TAC, information field of an International Mobile Equipment Identity, IMEI.

2. The mobile radio communications network device (700) according to Claim 1, wherein said at least one mobile radio communication device characteristic comprises an operational characteristic of said mobile radio communication device.

3. The mobile radio communications network device (700) according to Claim 2, wherein said mobile radio communication device operational characteristic is configured towards said mobile radio communication device.

4. The mobile radio communications network device (700) according to Claim 3, wherein the configuration is implemented by way of Open Mobile Alliance Device Management, OMA DM, signalling.

5. The mobile radio communications network device (700) according to any one of Claims 1 to 4, wherein said data identifying a mobile radio communication device type comprises data specifying that Machine-Type Communications, MTC, mobile radio communications devices are not to be included in acquisition of network performance measurements by said network device.

6. The mobile radio communications network device (700) according to any one of Claims 1 to 5, wherein said network device is adapted to retrieve from said at least one mobile radio communications device information indicative of at least one of: an access stratum, AS, capability of said mobile radio communication device; said at least one mobile radio communication device operational characteristic; and said mobile radio communication device type.

7. The mobile radio communications network device (700) according to Claim 6, wherein said device is adapted to retrieve said information upon initial registration of said mobile radio communication device with said network device.

8. The mobile radio communications network device (700) according to Claim 6 or 7, wherein said device is adapted to store obtained indicative information, further wherein said information is selectable to form at least a part of said selection parameters.

9. The mobile radio communications network device (700) according to Claim 8, wherein said device is adapted to transmit said stored obtained indicative information to a further network device in a UE mobility process.

10. The mobile radio communications network device (700) according to any one of Claims 1 to 9, comprising first and second operational elements, wherein said first operational element is adapted to forward to said second operational element an instruction comprising said selection parameters, further wherein, responsive to receipt of said instruction, said second operational element invokes collection of network performance measurements from one or more mobile radio communication devices having parameters matching said selection parameters.

11. The mobile radio communications network device (700) according to Claim 10, wherein said instruction comprising said selection parameters comprises a trace session activation command.

12. The mobile radio communications network device (700) according to Claim 11, wherein information relating to each selection parameter comprises at least one flag in said trace session activation command.

13. The mobile radio communications network device (700) according to any one of Claims 2 to 12, wherein said operational characteristic of said mobile radio communication device relates to at least one of: mobility of said mobile radio communication device; call and/or data traffic of said mobile radio communication device; memory capacity of said mobile radio communication device; and battery life of said mobile radio communication device.

14. The mobile radio communications network device (700) according to Claim 13, wherein said mobile radio communication device selection does not take into account either user consent or a roaming characteristic of the device.

15. A method of collecting network performance measurements performed by a mobile radio communications network device, the method comprising:
selecting at least one mobile radio communications device from which network performance measurements for Minimization of Drive Testing, MDT, are to be collected if at least one parameter of said at least one mobile radio communication device corresponds to at least one specified selection parameter,
wherein said at least one specified selection parameter comprises data identifying at least one mobile radio communication device characteristic,
wherein said at least one mobile radio communication device characteristic comprises data identifying a mobile radio communication device type, and
wherein said data identifying a mobile radio communication device type is included in a Type Allocation Code, TAC, information field of an International Mobile Equipment Identity, IMEI.

16. A mobile radio communications system comprising:
a mobile radio communications network device (700) adapted to collect network performance measurements and to select at least one mobile radio communications device from which network performance measurements for Minimization of Drive Testing, MDT, are to be collected if at least one parameter of said at least one mobile radio communication device corresponds to at least one specified selection parameter, wherein said at least one specified selection parameter comprises data identifying at least one mobile radio communication device characteristic; and
a mobile radio communication device adapted for radio configuration by said network device (700),
wherein said at least one mobile radio communication device characteristic comprises data identifying a mobile radio communication device type, and
wherein said data identifying a mobile radio communication device type is included in a Type of Allocation Code, TAC, information field of an International Mobile Equipment Identity, IMEI.

## Patentansprüche

1. Mobilfunkkommunikationsnetzvorrichtung (700) zum Sammeln von Netzleistungsmesswerten und Auswählen mindestens einer Mobilfunkkommunikationsvorrichtung, aus der Netzleistungsmesswerte für Minimization of Drive Testing, MDT, gesammelt werden sollen, falls mindestens ein Parameter der mindestens einen Mobilfunkkommunikationsvorrichtung mindestens einem spezifizierten Auswahlparameter entspricht, wobei der mindestens eine spezifizierte Auswahlparameter Daten aufweist, die mindestens eine Mobilfunkkommunikationsvorrichtungseigenschaft identifizieren,
wobei die mindestens eine Mobilfunkkommunikationsvorrichtungseigenschaft Daten aufweist, die einen Mobilfunkkommunikationsvorrichtungstyp identifizieren, und
wobei die Daten, die einen Mobilfunkkommunikationsvorrichtungstyp identifizieren, in einem Typzuteilungscode, TAC, Informationsfeld einer Internationalen Mobilgeräteidentität, IMEI, enthalten sind.

2. Mobilfunkkommunikationsnetzvorrichtung (700) nach Anspruch 1, wobei die mindestens eine Mobilfunkkommunikationsvorrichtungseigenschaft eine Betriebseigenschaft der Mobilfunkkommunikationsvorrichtung aufweist.

3. Mobilfunkkommunikationsnetzvorrichtung (700) nach Anspruch 2, wobei die Mobilfunkkommunikationsvorrichtung-Betriebseigenschaft auf die Mobilfunkkommunikationsvorrichtung hin konfiguriert ist.

4. Mobilfunkkommunikationsnetzvorrichtung (700) nach Anspruch 3, wobei die Konfiguration mittels Open Mobile Alliance Device Management, OMA DM, Signalisierung implementiert ist.

5. Mobilfunkkommunikationsnetzvorrichtung (700) nach einem der Ansprüche 1 bis 4, wobei die Daten, die einen Mobilfunkkommunikationsvorrichtungstyp identifizieren, Daten aufweisen, die spezifizieren, dass beim Erfassen von Netzleistungsmesswerten durch die Netzvorrichtung Maschinentypkommunikation, MTC, Mobilfunkkommunikationsvorrichtungen nicht mit einzubeziehen sind.

6. Mobilfunkkommunikationsnetzvorrichtung (700) nach einem der Ansprüche 1 bis 5, wobei die Netzvorrichtung geeignet ist, aus der mindestens einen Mobilfunkkommunikationsvorrichtung Information abzurufen, die eine Zugangsschicht, AS, Fähigkeit der Mobilfunkkommunikationsvorrichtung; und/oder die Betriebseigenschaft der mindestens einen Mobilfunkkommunikationsvorrichtung; und/oder den Mobilfunkkommunikationsvorrichtungstyp bezeichnen.

7. Mobilfunkkommunikationsnetzvorrichtung (700) nach Anspruch 6, wobei die Vorrichtung geeignet ist, anlässlich einer Erstanmeldung der Mobilfunkkommunikationsvorrichtung bei der Netzvorrichtung die Information abzurufen.

8. Mobilfunkkommunikationsnetzvorrichtung (700) nach Anspruch 6 oder 7, wobei die Vorrichtung geeignet ist, erfasste bezeichnende Information zu speichern, wobei die Information ferner auswählbar ist, um mindestens einen Teil der Auswahlparameter zu bilden.

9. Mobilfunkkommunikationsnetzvorrichtung (700) nach Anspruch 8, wobei die Vorrichtung geeignet ist, die gespeicherte erfasste bezeichnende Information in einem UE-Mobilitätsprozess zu einer weiteren Netzvorrichtung zu senden.

10. Mobilfunkkommunikationsnetzvorrichtung (700) nach einem der Ansprüche 1 bis 9, aufweisend erste und zweite Betriebselemente, wobei das erste Betriebselement geeignet ist, eine Anweisung, die die Auswahlparameter aufweist, zu dem zweiten Betriebselement weiterzuleiten, wobei ferner als Antwort auf den Empfang der Anweisung das zweite Betriebselement ein Sammeln von Netzleistungsmesswerten aus einer oder mehreren Mobilfunkkommunikationsvorrichtungen, die mit den Auswahlparametern übereinstimmende Parameter haben, aufruft.

11. Mobilfunkkommunikationsnetzvorrichtung (700) nach Anspruch 10, wobei die Anweisung, die die Auswahlparameter aufweist, einen Verfolgungssitzung-Aktivierungsbefehl aufweist.

12. Mobilfunkkommunikationsnetzvorrichtung (700) nach Anspruch 11, wobei die sich auf jeden Auswahlparameter beziehenden Information mindestens ein Flag in dem Verfolgungssitzung-Aktivierungsbefehl aufweist.

13. Mobilfunkkommunikationsnetzvorrichtung (700) nach einem der Ansprüche 2 bis 12, wobei die Betriebseigenschaft der Mobilfunkkommunikationsvorrichtung sich auf eine Mobilität der Mobilfunkkommunikationsvorrichtung; und/oder einen Ruf- und/oder Datenverkehr der Mobilfunkkommunikationsvorrichtung; und/oder eine Speicherkapazität der Mobilfunkkommunikationsvorrichtung; und/oder eine Batterielebensdauer der Mobilfunkkommunikationsvorrichtung bezieht.

14. Mobilfunkkommunikationsnetzvorrichtung (700) nach Anspruch 13, wobei das Auswählen der Mobilfunkkommunikationsvorrichtung weder eine Benutzereinwilligung noch eine Roaming-Eigenschaft der Vorrichtung berücksichtigt.

15. Von einer Mobilfunkkommunikationsnetzvorrichtung durchgeführtes Verfahren zum Sammeln von Netzleistungsmesswerten, wobei das Verfahren aufweist:
Auswählen mindestens einer Mobilfunkkommunikationsvorrichtung, aus der Netzleistungsmesswerte für Minimization of Drive Testing, MDT, gesammelt werden sollen, falls mindestens ein Parameter der mindestens einen Mobilfunkkommunikationsvorrichtung mindestens einem spezifizierten Auswahlparameter entspricht,
wobei der mindestens eine spezifizierte Auswahlparameter Daten aufweist, die mindestens eine Mobilfunkkommunikationsvorrichtungseigenschaft identifizieren,
wobei die mindestens eine Mobilfunkkommunikationsvorrichtungseigenschaft Daten aufweist, die einen Mobilfunkkommunikationsvorrichtungstyp identifizieren, und
wobei die Daten, die einen Mobilfunkkommunikationsvorrichtungstyp identifizieren, in einem Typzuteilungscode, TAC, Informationsfeld einer Internationalen Mobilgeräteidentität, IMEI, enthalten sind.

16. Mobilfunkkommunikationssystem aufweisend:
eine Mobilfunkkommunikationsnetzvorrichtung (700), die geeignet ist, Netzleistungsmesswerte zu sammeln und mindestens eine Mobilfunkkommunikationsvorrichtung auszuwählen, aus der Netzleistungsmesswerte für Minimization of Drive Testing, MDT, gesammelt werden sollen, falls mindestens ein Parameter der mindestens einen Mobilfunkkommunikationsvorrichtung mindestens einem spezifizierten Auswahlparameter entspricht, wobei der mindestens eine spezifizierte Auswahlparameter Daten aufweist, die mindestens eine Mobilfunkkommunikationsvorrichtungseigenschaft identifizieren; und
eine für Funkkonfiguration durch die Netzvorrichtung (700) geeignete Mobilfunkkommunikationsvorrichtung,
wobei die mindestens eine Mobilfunkkommunikationsvorrichtungseigenschaft Daten aufweist, die einen Mobilfunkkommunikationsvorrichtungstyp identifizieren, und
wobei die Daten, die einen Mobilfunkkommunikationsvorrichtungstyp identifizieren, in einem Typzuteilungscode, TAC, Informationsfeld einer Internationalen Mobilgeräteidentität, IMEI, enthalten sind.

## Revendications

1. Dispositif de réseau de communications radio mobile (700) adapté pour collecter des mesures de performance de réseau et pour sélectionner au moins un dispositif de communications radio mobile à partir duquel des mesures de performance de réseau pour une minimisation de test de couverture radio, MDT, doivent être collectées si au moins un paramètre dudit au moins un dispositif de communication radio mobile correspond à au moins un paramètre de sélection spécifié, dans lequel ledit au moins un paramètre de sélection spécifié comprend des données identifiant au moins une caractéristique de dispositif de communication radio mobile,
dans lequel ladite au moins une caractéristique de dispositif de communication radio mobile comprend des données identifiant un type de dispositif de communication radio mobile, et
dans lequel lesdites données identifiant un type de dispositif de communication radio mobile sont incluses dans un champ d'information de type de code d'allocation, TAC, d'une identité internationale d'équipement mobile, IMEI.

2. Dispositif de réseau de communications radio mobile (700) selon la revendication 1, dans lequel ladite au moins une caractéristique de dispositif de communication radio mobile comprend une caractéristique opérationnelle dudit dispositif de communication radio mobile.

3. Dispositif de réseau de communications radio mobile (700) selon la revendication 2, dans lequel ladite caractéristique opérationnelle de dispositif de communication radio mobile est configurée vers ledit dispositif de communication radio mobile.

4. Dispositif de réseau de communications radio mobile (700) selon la revendication 3, dans lequel la configuration est mise en œuvre au moyen d'une signalisation de gestion de dispositif d'alliance mobile ouverte, DM OMA.

5. Dispositif de réseau de communications radio mobile (700) selon l'une quelconque des revendications 1 à 4, dans lequel lesdites données identifiant un type de dispositif de communication radio mobile comprennent des données spécifiant que des dispositifs de communications radio mobiles de communications de type machine, MTC, ne doivent pas être inclus dans l'acquisition de mesures de performance de réseau par ledit dispositif de réseau.

6. Dispositif de réseau de communications radio mobile (700) selon l'une quelconque des revendications 1 à 5, dans lequel ledit dispositif de réseau est adapté pour récupérer à partir dudit au moins un dispositif de communications radio mobile des informations indicatives d'au moins l'un parmi : une capacité de strate d'accès, AS, dudit dispositif de communication radio mobile ; ladite au moins une caractéristique opérationnelle de dispositif de communication radio mobile ; et ledit type de dispositif de communication radio mobile.

7. Dispositif de réseau de communications radio mobile (700) selon la revendication 6, dans lequel ledit dispositif est adapté pour récupérer lesdites informations lors de l'enregistrement initial dudit dispositif de communication radio mobile avec ledit dispositif de réseau.

8. Dispositif de réseau de communications radio mobile (700) selon la revendication 6 ou 7, dans lequel ledit dispositif est adapté pour stocker des informations indicatives obtenues, en outre dans lequel lesdites informations sont sélectionnables pour former au moins une partie desdits paramètres de sélection.

9. Dispositif de réseau de communications radio mobile (700) selon la revendication 8, dans lequel ledit dispositif est adapté pour transmettre lesdites informations indicatives obtenues stockées à un autre dispositif de réseau dans un processus de mobilité d'UE.

10. Dispositif de réseau de communications radio mobile (700) selon l'une quelconque des revendications 1 à 9, comprenant des premier et deuxième éléments opérationnels, dans lequel ledit premier élément opérationnel est adapté pour transférer audit deuxième élément opérationnel une instruction comprenant lesdits paramètres de sélection, en outre dans lequel, en réponse à la réception de ladite instruction, ledit deuxième élément opérationnel invoque la collecte de mesures de performance de réseau à partir d'un ou plusieurs dispositifs de communication radio mobiles ayant des paramètres concordant avec lesdits paramètres de sélection.

11. Dispositif de réseau de communications radio mobile (700) selon la revendication 10, dans lequel ladite instruction comprenant lesdits paramètres de sélection comprend une commande d'activation de session de trace.

12. Dispositif de réseau de communications radio mobile (700) selon la revendication 11, dans lequel des informations relatives à chaque paramètre de sélection comprennent au moins un drapeau dans ladite commande d'activation de session de trace.

13. Dispositif de réseau de communications radio mobile (700) selon l'une quelconque des revendications 2 à 12, dans lequel ladite caractéristique opérationnelle dudit dispositif de communication radio mobile concerne au moins l'un parmi : une mobilité dudit dispositif de communication radio mobile ; trafic d'appels et/ou de données dudit dispositif de communication radio mobile ; une capacité de mémoire dudit dispositif de communication radio mobile ; et une durée de vie de batterie dudit dispositif de communication radio mobile.

14. Dispositif de réseau de communications radio mobile (700) selon la revendication 13, dans lequel ladite sélection de dispositif de communication radio mobile ne prend en compte ni un consentement d'utilisateur ni une caractéristique d'itinérance du dispositif.

15. Procédé de collecte de mesures de performance de réseau effectué par un dispositif de réseau de communications radio mobile, le procédé comprenant :
la sélection d'au moins un dispositif de communications radio mobile à partir duquel des mesures de performance de réseau pour une minimisation de test de couverture radio, MDT, doivent être collectées si au moins un paramètre dudit au moins un dispositif de communication radio mobile correspond à au moins un paramètre de sélection spécifié,
dans lequel ledit au moins un paramètre de sélection spécifié comprend des données identifiant au moins une caractéristique de dispositif de communication radio mobile,
dans lequel ladite au moins une caractéristique de dispositif de communication radio mobile comprend des données identifiant un type de dispositif de communication radio mobile, et
dans lequel lesdites données identifiant un type de dispositif de communication radio mobile sont incluses dans un champ d'information de type de code d'allocation, TAC, d'une identité internationale d'équipement mobile, IMEI.

16. Système de communications radio mobile comprenant :
un dispositif de réseau de communications radio mobile (700) adapté pour collecter des mesures de performance de réseau et pour sélectionner au moins un dispositif de communications radio mobile à partir duquel des mesures de performance de réseau pour une minimisation de test de couverture radio, MDT, doivent être collectées si au moins un paramètre dudit au moins un dispositif de communication radio mobile correspond à au moins un paramètre de sélection spécifié, dans lequel ledit au moins un paramètre de sélection spécifié comprend des données identifiant au moins une caractéristique de dispositif de communication radio mobile ; et
un dispositif de communication radio mobile adapté pour une configuration radio par ledit dispositif de réseau (700),
dans lequel ladite au moins une caractéristique de dispositif de communication radio mobile comprend des données identifiant un type de dispositif de communication radio mobile, et
dans lequel lesdites données identifiant un type de dispositif de communication radio mobile sont incluses dans un champ d'information de type de code d'allocation, TAC, d'une identité internationale d'équipement mobile, IMEI.
